# EUROPÄISCHE PATENTANMELDUNG

(11) **EP 2 397 860 A1**
(43) Veröffentlichungstag der Anmeldung: **21.12.2011**
(21) Anmeldenummer: 10166546.1
(22) Anmeldetag: 18.06.2010
(51) Int. Cl.: G01N 35/00, G01N 35/10, B05C 5/00, B05C 11/04

(54) **Vorrichtung und Verfahren zur Rakelbeschichtung eines Trägerbandes**

(71) Anmelder: Roche Diagnostics GmbH, 68305 Mannheim (DE); F.Hoffmann-La Roche AG, 4070 Basel (CH)
(72) Erfinder: Ibach, Alexander, 77815 Buehl (DE); Isgoeren, Yilmaz, 67063 Ludwigshafen (DE); Reschke, Thilo, 69514 Laudenbach (DE)
(74) Vertreter: Pfiz, Thomas

(57) **Zusammenfassung**

Die Erfindung betrifft eine Vorrichtung und ein damit ausführbares Verfahren zur Rakelbeschichtung eines Trägerbandes (10) mit einer reaktiven oder oberflächenaktiven Beschichtungsmasse (22) umfassend einen Rakelkasten (12), der einen mit fließfähiger Beschichtungsmasse (22) unter Einstellung eines Füllpegels befüllbaren Vorratsraum (32) aufweist, wobei der vorzugsweise nach oben offene Vorratsraum (32) eine untere Auftragsöffnung (30) zum Vorbeiführen des Trägerbandes (10) besitzt und von einer Rakel (16) begrenzt ist. Erfindungsgemäß wird vorgeschlagen, dass der Rakelkasten (12) einen unterhalb des Füllpegels in den Vorratsraum (32) mündenden Zuführkanal (18) zum Nachfüllen von Beschichtungsmasse (22) aufweist.

## Beschreibung

Die Erfindung betrifft eine Vorrichtung zur Rakelbeschichtung eines Trägerbandes mit einer reaktiven oder oberfächenaktiven, speziell klebenden Beschichtungsmasse umfassend einen Rakelkasten, der einen mit fließfähiger Beschichtungsmasse unter Einstellung eines Füllpegels befüllbaren Vorratsraum aufweist, wobei der vorzugsweise nach oben offene Vorratsraum eine untere Auftragsöffnung als Kontaktzone des vorbeigeführten Trägerbandes besitzt und in Transportrichtung des Trägerbandes von einer Rakel begrenzt ist. Die Erfindung betrifft weiter ein entsprechendes Beschichtungsverfahren.

Aus der DE-A 42 05 996 ist ein Verfahren zur Herstellung eines selbsttragenden Testfeldmaterials sehr geringer Schichtdicke bekannt, bei dem eine Reagenzfilmmasse von oben aus einem Rakelkasten auf eine Trägermaterialbahn aufgerakelt wird, wobei der Rakelkasten in Transportrichtung von einer die Materialbahn von oben kontaktierenden Rakel abgeschlossen wird. Dort wird der Rakelkasten nur schematisch als Alternative zu einer Schlitzdüsenzuführung dargestellt, wobei als Vorteil angesehen wird, dass der Überschuss an Reagenzfilmmasse, der von dem Rakellineal abgestreift wird, im Rakelkasten verbleibt.

Ausgehend hiervon liegt der Erfindung die Aufgabe zugrunde, die im Stand der Technik bekannten Vorrichtungen und Verfahren weiter zu verbessern und vor allem für den Bereich diagnostischer Anwendungen eine besondere Homogenität der Beschichtung auch bei scherempfindlichen Beschichtungsmassen zu gewährleisten.

Zur Lösung dieser Aufgabe wird die in den unabhängigen Patentansprüchen angegebene Merkmalskombination vorgeschlagen. Vorteilhafte Ausgestaltungen und Weiterbildungen der Erfindung ergeben sich aus den abhängigen Ansprüchen.

Dementsprechend wird im Hinblick auf eine Beschichtungsvorrichtung vorgeschlagen, dass der Rakelkasten einen unterhalb des Füllpegels in den Vorratsraum mündenden Zuführkanal zum Nachfüllen von Beschichtungsmasse aufweist. Dadurch wird eine Phasengrenzflächenvergrößerung vermieden, wie sie beispielsweise beim Zufließen über eine geneigte Wand auftreten kann. Somit werden unerwünschte Phasenseparationen unterdrückt. Zugleich wird ein negativer Einfluss von an der Oberfläche der Beschichtungsmasse sich akkumulierenden separierten Phasen durch die Zuführung von frischer Beschichtungsmasse von unten direkt in das Massevolumen reduziert.

Eine weitere vorteilhafte Ausgestaltung sieht vor, dass der Zuführkanal von unten her in den Vorratsraum mündet, so dass die Mündungsöffnung des Zuführkanals von der Auftragsöffnung abgewandt ist. Auf diese Weise lassen sich Druckschwankungen direkt vor dem Rakelspalt durch die beispielsweise über eine Pumpe eindosierte Masse weitgehend vermeiden.

Vorteilhaft ist es auch, wenn der Zuführkanal zumindest an seinem in den Rakelkasten führenden Endabschnitt durch eine im Querschnitt ringförmig geschlossene Rohrleitung oder durch einen Schlauch bzw. Schlauchanschluss gebildet ist, so dass keine Phasengrenze zur Atmosphäre auftritt.

Um das im Rakelkasten vorgehaltene Materialvolumen möglichst gering zu halten und gleichzeitig eine Steuerung der Füllstandshöhe zu vereinfachen, ist es vorteilhaft, wenn der Vorratsraum in seinem unteren Bereich zwischen der Mündung des Zuführkanal und der Auftragsöffnung im Horizontalquerschnitt sich nach unten verjüngt. Dadurch können auch Materialverluste beim Anfahren und schalten der Beschichtungsvorrichtung verringert werden.

In besonders bevorzugter Ausführung beträgt die Öffnungsweite der Auftragsöffnung in Transportrichtung des Trägerbandes gesehen weniger als 30 mm, vorzugsweise weniger als 15 mm. Dadurch lässt sich eine Reduzierung der Scherung durch die Walzenströmung, welche sich im Rakelkasten aufgrund der vorbeibewegten Trägerbahn einstellt, sowie eine Reduzierung der Verweilzeit eines Volumenelements der Beschichtungsmasse in der Walzenströmung erreichen.

Vorteilhafterweise ist der Vorratsraum in einem oberen Randbereich durch einen Überlauf zum Abführen von überschüssiger Beschichtungsmasse begrenzt. Damit kann eine an der Oberfläche akkumulierte Trennphase einfach überlaufen bzw. abgezogen werden, so dass die Beschichtungshomogenität nicht negativ beeinflusst wird. Gleichzeitig kann damit eine einfache, gleichsam selbstregulierte Einstellung des Füllpegels ermöglicht werden.

Günstig ist es auch, wenn die Beschichtungsmasse aus einem Vorratsbehälter über den Zuführkanal in den Vorratsraum einbringbar ist. Dies kann während des Fertigungsprozesses einfach dadurch realisiert werden, dass die Beschichtungsmasse mittels einer an den Zuführkanal angeschlossenen und durch eine Steuereinrichtung angesteuerten Förderpumpe zur Konstanthaltung des Füllpegels in den Vorratsraum eindosierbar ist.

Gemäß einer vorteilhaften Ausgestaltung ist eine Bandführungseinrichtung zum Vorbeiführen des Trägerbandes an der Auftragsöffnung und der Rakel vorgesehen, wobei die Bandführungseinrichtung eine Awickelspule, eine Aufwickelspule und eine an dem Rakelkasten angeordnete Umlenkrolle für das Trägerband aufweist, so dass große Produktlängen von Rolle zu Rolle im Sinne einer Endlosfertigung möglich sind.

Eine besonders vorteilhafte Anwendung sieht vor, dass die aus festen und flüssigen Substanzen mehrphasig zusammengesetzte Beschichtungsmasse auf dem Trägerband eine Trockenreagenzschicht zur Bestimmung eines Analyten in einer Körperflüssigkeit bildet. Zur Bildung einer solchen Trockenreagenzschicht ist es von Vorteil, wenn die Beschichtung auf dem Trägerband in einem Auslaufbereich nach dem Rakelkasten durch geeigneten Energieeintrag trockenbar ist.

In verfahrensmäßiger Hinsicht wird die eingangs genannte Aufgabe dadurch gelöst, dass die Beschichtungsmasse über einen unterhalb des Füllniveaus in den Vorratsraum mündenden Zuführkanal kontinuierlich befüllt wird. Hierbei kann die Beschichtungsmasse während des Beschichtungsvorganges vorzugsweise unter Konstanthaltung des Füllniveaus gesteuert in den Vorratsraum eindosiert werden. Dabei ist es besonders günstig, wenn die Beschichtungsmasse mit einer allgemein nach oben gerichteten, gegebenenfalls schräg zur Ebene des Füllniveaus verlaufenden Aufwärtsströmung in den Vorratsraum eingebracht wird, und wenn ein Überschuss an Beschichtungsmasse über einen Überlauf im Bereich des Füllniveaus abgeleitet werden kann.

Im Folgenden wird die Erfindung anhand eines in der Zeichnung schematisch dargestellten Ausführungsbeispiels näher erläutert. Es zeigen:
- Fig. 1: ein nicht maßstabsgetreues Anlagenschema zur Rakelbeschichtung eines Trägerbandes für analytische Zwecke;
- Fig. 2: einen Rakelkasten mit einem Zuführkanal für Beschichtungsmasse in perspektivischer Darstellung;
- Fig. 3: einen Schnitt im Bereich des Zuführkanals durch den Rakelkasten nach Fig. 2.

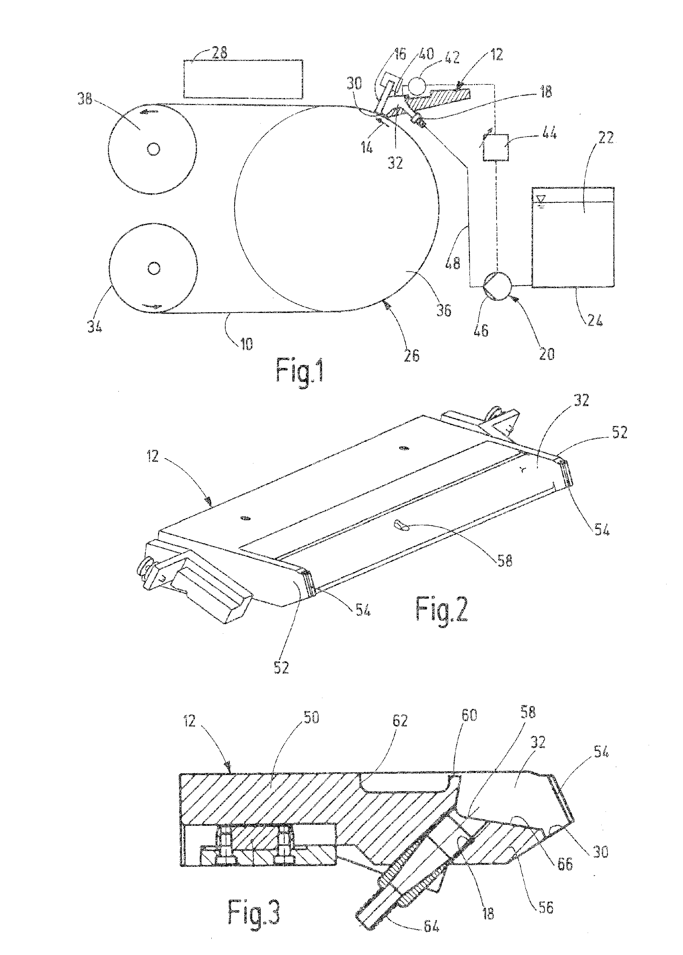

Die in Fig. 1 dargestellte Vorrichtung bzw. Anlage zur Rakelbeschichtung eines vorspulbaren Trägerbandes 10 mit einem Reagenzfilm umfasst einen Rakelkasten 12 mit einer in Transportrichtung 14 des Trägerbandes 10 abschließender Rakel 16 und einem Massezuführkanal 18, eine Fördereinrichtung 20 zum Ein- bzw. Nachfüllen von fließfähiger Beschichtungsmasse 22 aus einem Vorlagebehälter 24 über den Zuführkanal 18, eine Bandführungseinrichtung 26 zum Vorspulen des Trägerbandes 10 und einen Trockner 28 zum Trocknen der Beschichtung unter Ausbildung eines Trockenreagenzfilms auf dem Trägerband.

Die Bandführungseinrichtung 26 ermöglicht das Vorbeiführen des Trägerbandes 10 an einer der Rakel 16 vorgeordneten unteren Auftragsöffnung 30 eines mit der Beschichtungsmasse befüllten Vorratsraums 32 des Rakelkastens 12. Zu diesem Zweck wird das von einer Abwickelspule 34 zugeführte unbeschichtete Band 10 im Bereich des Rakelkastens 12 über eine Umlenkrolle 36 geführt, während das im Rakel-über-Rolle-Verfahren beschichtete und anschließend getrocknete Band auf einer angetriebenen Aufwickelspule 38 aufgespult wird.

Die Schichtdicke kann durch Einstellung eines Rakelspaltes zwischen einer Messerkante der Rakel 16 und dem Trägerband 10 eingestellt werden. Eine weitere Einflussgröße auf die Schichtdicke ist die Füllstandshöhe der Beschichtungsmasse 22 im Vorratsraum 32 des Rakelkastens 12, die möglichst auf einen konstanten Füllpegel 40 eingestellt bzw. verbrauchsgerecht gesteuert werden sollte. Hierfür weist die Fördereinrichtung 20 einen Füllstandsgeber 42, eine Steuereinheit 44 und damit angesteuerte Pumpe 46 in einem Leitungszweig 48 des Zuführkanals 18 auf. Anstelle einer automatisch arbeitenden Füllstandskontrolle kann die Steuereinheit 44 auch durch eine manuelle Bedieneinheit gebildet sein, die von einer den Füllstand beobachtenden Bedienperson betätigt werden kann.

Wie am besten aus Fig. 2 und 3 ersichtlich, besitzt der Rakelkasten 12 einen den Vorratsraum 32 begrenzenden

Tragkörper 50 mit zwei Seitenwänden 52, vor deren Enden die Rakel 16 in Form eines Lineals oder Messers höhenverstellbar einsetzbar ist. Eine Führung 54 dient zur Aufnahme von Dichtungen zwischen Rakelkasten 12 und Rakel 16. Zwischen der Ebene der Führung 54 und dem Längsrand eines Bodens 56 des Tragkörpers 50 erstreckt sich somit die Auftragsöffnung 30 über eine gegebene Öffnungsweite bzw. Kontaktlänge in Transportrichtung 14 des Trägerbandes 10. Durch eine kurze Kontaktlänge beispielsweise im Bereich zwischen 10 bis 15 mm kann der nachteilige Einfluss einer in diesem Bereich aufgrund des unter der Rakel hindurch bewegten Trägerbandes hervorgerufenen Walzenströmung gering gehalten werden. Speziell wird damit eine Reduzierung der Scherung durch die Walzenströmung sowie eine Reduzierung der Verweilzeit eines Volumenelements der Beschichtungsmasse in der Walzenströmung erreicht.

Zur Unterdrückung einer Phasenseparation wird zumindest die im Beschichtungsprozess nachgefüllte Beschichtungsmasse 22 unterhalb eines regulären Füllpegels bzw. Füllniveaus direkt in den Vorratsraum 32 in das dort vorhandene Massevolumen eingespeist. Zu diesem Zweck mündet der Zuführkanal 18 unterhalb des Füllniveaus in dem Bodenbereich des Trägerkörpers 50. Die Mündungsöffnung 58 des Zuführkanals 18 ist dabei ggf. schräg nach oben gerichtet, so dass der Druck direkt vor dem Rakelspalt durch eine mögliche Pulsation aufgrund der eingesetzten Förderpumpe 46 nicht wesentlich beeinflusst wird.

Durch die Zuführung der scherempfindlichen Beschichtungsmasse 22 über den Zuführkanal 18 von unten her kann der Einfluss einer sich am Füllpegel im Rakelkasten 12 akkumulierenden separierten Phase auf die Beschichtungshomogenität gering gehalten werden. Eine weitere Verbesserung in dieser Hinsicht kann durch einen Überlauf 60 im oberen Bereich des Vorratsraums 32 erzielt werden. Der Überlauf 60 bildet dabei eine nach oben weisende Kante, über welche die separierte Phase überlaufen und in eine Auffangmulde 62 in dem Trägerkörper 50 abgezogen werden kann.

Der Überlauf 60 verhindert zugleich eine Variation der Füllstandshöhe, welche die Schichtdicke der aufgetragenen Masse auf dem Trägerband 10 während der Beschichtung beeinflusst, wobei auch die Steuerung der Füllstandshöhe vereinfacht wird.

Zweckmäßig ist der Zuführkanal 18 zumindest an seinem in den Rakelkasten 12 führenden Endabschnitt durch eine Rohrleitung oder einen Schlauchanschluss 64 gebildet, so dass die zufließende Beschichtungsmasse 22 allseitig von der Umgebungsluft getrennt ist.

Um eine weitere Verbesserung hinsichtlich des vorgehaltenen Volumens an Beschichtungsmasse zu erzielen, ist der Vorratsraum 32 in seinem unteren Bereich zwischen der Mündung 58 des Zuführkanals 18 und der Auftragsöffnung 30 durch eine schräg abfallende Bodenwand 66 nach unten verjüngt. Hierbei ist anzumerken, dass der Auftrag des im Endprodukt genutzten Beschichtungsgutes erst nach Einstellung der gewünschten Füllstandshöhe erfolgt, wobei ggf. ein Vorlauf des Trägerbandes 10 zu verwerfen ist.

Die vorstehenden Erläuterungen offenbaren neben der Beschichtungsvorrichtung auch deren Arbeitsweise. Zusammenfassend ist damit ein Beschichtungsverfahren spezifiziert, bei dem fließfähige Beschichtungsmasse 22 in einen Vorratsraum 32 eines Rakelkastens 12 bis zu einem Füllniveau 40 eingefüllt wird und an einer unteren Auftragsöffnung 30 auf das dort vorbeigeführte Trägerband 10 aufgebracht wird, wobei die Schichtdicke auf dem Trägerband durch eine den Vorratsraum in Transportrichtung 14 des Trägerbandes begrenzende Rakel 16 eingestellt wird, und wobei die Beschichtungsmasse 22 über einen unterhalb des Füllniveaus 40 in den Vorratsraum mündenden Zuführkanal 18 nachgefüllt wird.

Ein besonderes Einsatzgebiet liegt im analytischdiagnostischen Bereich, um eine aus festen und flüssigen Substanzen zusammengesetzte Beschichtungsmasse 22 auf ein Trägerband 10 als Trockenreagenzschicht zur Bestimmung eines Analyten in einer Körperflüssigkeit aufzubringen, insbesondere für Blutglucosetests. Derartige trägergebundene Tests mit einem Einschicht-Reaktionsfilm sind beispielsweise in der EP-A 1566637 detailliert beschrieben.

Für einen niedrigen Variationskoeffizienten bei einer Blutglucosemessung ist es von Vorteil, eine möglichst homogene Schichtdicke bzw. Beschichtung herzustellen. Problematisch bei den hierfür verwendeten mehrphasigen Reagenzsystemen ist das Auftreten einer scherinduzierten Phasenseparation im Zuge des Beschichtungsvorganges. Zur Problematik der Scherempfindlichkeit kann beispielhaft auf die folgenden Veröffentlichungen verwiesen werden:
- J. Phys.: Condens. Matter 12, R207-R264 (2000);
- Macromolecules 17, 1187-1195 (1984);
- Polymer Bulletin 59, 545-554 (2007);
- Dissertation "Rheo-optische Experimente zur Hydro-und Thermodynamik von Polymeren in verdünnten Lösungen" von Michael Pönitsch, Univ. Berlin (1999).

In diesem Zusammenhang wurde von den Erfindern als problematisch erkannt, dass bei Zuführung scherempfindlicher Beschichtungsmassen über eine schräg abfallende Wand eine nachteilige Aufspreitung der Flüssiganteile auftreten kann, wodurch eine neue und größere Phasengrenzfläche hervorgerufen wird, an welcher Substanzen separieren können. Weiterhin kann eine Zugabe der Beschichtungsmasse von oben in den Rakelkasten zu unerwünschten Luftblaseneinschlüssen führen. Zudem kann sich im Rakelkasten aufgrund der vorbeibewegten Trägerbahn eine walzenförmige Strömung einstellen, wodurch die Beschichtungsmasse während eines Beschichtungsvorganges kontinuierlich geschert wird, was bei scherempfindlichen Massen wiederum zu einer Phasenseparation führt.

Eine separierte leichtere Phase steigt an die Massenoberfläche im Rakelkasten und wird dort über die Zeitdauer des Beschichtungsprozesses akkumuliert. Dies führt dazu, dass bei langer Prozessdauer die separierten Phasen den Rakelspalt erreichen und somit eine inhomogene Nass- bzw. Trockenschicht verursachen. Durch Verringerung der Geschwindigkeit des durchgezogenen Trägerbandes könnte zwar die Scherung im Rakelkasten verringert werden. Durch eine Verlangsamung der Beschichtungsgeschwindigkeit verlängert sich allerdings die Beschichtungszeit für eine Charge, so dass sich chemische Veränderungen der in der Masse enthaltenen Substanzen, insbesondere Enzyme und Indikatoren ergeben können, was entsprechend zu einer Vergrößerung des Variationskoeffizienten beim späteren Einsatz bei Blutglucosemessungen führt. Eine weitere prinzipielle Möglichkeit der Phasenseparation entgegen zu wirken wäre, die Rheologie der Beschichtungsmassen bzgl. Scherempfindlichkeit sowie Separationsverhalten anzupassen. Auch dies ist allerdings nur begrenzt möglich, da durch eine Änderung der Rezeptur einer Beschichtungsmasse die Funktion der resultierenden trockenen Beschichtung beeinflusst wird.

Durch die erfindungsgemäße Applikationsvorrichtung ist es auch bei scherempfindlichen Beschichtungsmassen gelungen, Phasenseparationen sowie Akkumulationen so weit zu vermeiden, dass Inhomogenitäten in der Beschichtung weitgehend vernachlässigbar sind. Dabei konnte in Versuchen Bandmaterial mit über 1000 m Länge und ca. 25 *µ*m Dicke an einem Rakelspalt mit weniger als 100 *µ*m Spalthöhe mit einem homogenen Reagenzfilm versehen werden. Zweckmäßig wird eine Bandfoliendicke im Bereich zwischen 10 bis 500 *µ*m gewählt, während der Gesamtbereich der bevorzugten Spalthöhe im Bereich zwischen 30 bis 200 *µ*m liegt.

Solchermaßen beschichtetes Bandmaterial kann durch einen Feinzuschnitt zerteilt und auf Trägern aufgebracht für eine Massenfertigung von Einzeltests verwendet werden, ohne dass sich wesentliche Messwertschwankungen aufgrund des Herstellungsprozesses ergeben.

## Patentansprüche

1. Vorrichtung zur Rakelbeschichtung eines Trägerbandes (10) mit einer reaktiven oder oberfächenaktiven, insbesondere klebenden Beschichtungsmasse (22) umfassend einen Rakelkasten (12), der einen mit fließfähiger Beschichtungsmasse (22) unter Einstellung eines Füllpegels befüllbaren Vorratsraum (32) aufweist, wobei der vorzugsweise nach oben offene Vorratsraum (32) eine untere Auftragsöffnung (30) als Kontaktzone des vorbeigeführten Trägerbandes (10) besitzt und von einer Rakel (16) begrenzt ist, **dadurch gekennzeichnet, dass** der Rakelkasten (12) einen unterhalb des Füllpegels in den Vorratsraum (32) mündenden Zuführkanal (18) zum Nachfüllen von Beschichtungsmasse (22) aufweist.

2. Vorrichtung nach Anspruch 1, **dadurch gekennzeichnet, dass** der Zuführkanal (18) von unten her in den Vorratsraum (32) mündet, so dass die Mündungsöffnung (58) des Zuführkanals (18) von der Auftragsöffnung (30) abgewandt ist.

3. Vorrichtung nach Anspruch 1 oder 2, **dadurch gekennzeichnet, dass** der Zuführkanal (18) zumindest an seinem in den Rakelkasten (12) führenden Endabschnitt durch eine Rohrleitung oder einen Schlauchanschluss (64) gebildet ist.

4. Vorrichtung nach einem der Ansprüche 1 bis 3, **dadurch gekennzeichnet, dass** der Vorratsraum (32) in seinem unteren Bereich zwischen der Mündung des Zuführkanal (18) und der Auftragsöffnung (30) nach unten verjüngt ist.

5. Vorrichtung nach einem der Ansprüche 1 bis 4, **dadurch gekennzeichnet, dass** die Öffnungsweite der Auftragsöffnung (30) in Transportrichtung des Trägerbandes (10) gesehen weniger als 30 mm, vorzugsweise weniger als 15 mm beträgt.

6. Vorrichtung nach einem der Ansprüche 1 bis 5, **dadurch gekennzeichnet, dass** der Vorratsraum (32) in einem oberen Randbereich einen Überlauf (60) zum Abführen von überschüssiger Beschichtungsmasse (22) aufweist.

7. Vorrichtung nach einem der Ansprüche 1 bis 6, **dadurch gekennzeichnet, dass** die Beschichtungsmasse (22) aus einem Vorratsbehälter (24) über den Zuführkanal (18) in den Vorratsraum (32) einbringbar ist.

8. Vorrichtung nach einem der Ansprüche 1 bis 7, **dadurch gekennzeichnet, dass** die Beschichtungsmasse (22) mittels einer an den Zuführkanal (18) angeschlossenen und durch eine Steuereinrichtung angesteuerten Förderpumpe zur Konstanthaltung des Füllpegels in den Vorratsraum (32) eindosierbar ist.

9. Vorrichtung nach einem der Ansprüche 1 bis 8, **gekennzeichnet durch** eine Bandführungseinrichtung (26) zum Vorbeiführen des Trägerbandes (10) an der Auftragsöffnung (30) und der Rakel (16), wobei die Bandführungseinrichtung (26) eine Abwickelspule (34), eine Aufwickelspule (38) und eine an dem Rakelkasten (12) angeordnete Umlenkrolle (36) für das Trägerband (10) aufweist.

10. Vorrichtung nach einem der Ansprüche 1 bis 9, **dadurch gekennzeichnet, dass** die aus festen und flüssigen Substanzen mehrphasig zusammengesetzte Beschichtungsmasse (22) auf dem Trägerband (10) eine Trockenreagenzschicht zur Bestimmung eines Analyten in einer Körperflüssigkeit bildet.

11. Vorrichtung nach einem der Ansprüche 1 bis 10, **dadurch gekennzeichnet, dass** die Beschichtung auf dem Trägerband (10) in einem Auslaufbereich nach dem Rakelkasten (12) durch eine Energieeintrageinrichtung (28) trockenbar ist.

12. Verfahren zur Rakelbeschichtung eines Trägerbandes (10) mit einer reaktiven oder oberflächenaktiven, insbesondere klebenden Beschichtungsmasse (22) bei welchem fließfähige Beschichtungsmasse (22) in einen Vorratsraum (32) eines Rakelkastens (12) bis zu einem Füllniveau eingefüllt wird und an einer unteren Auftragsöffnung (30) auf das dort vorbeigeführte Trägerband (10) aufgebracht wird, wobei die Schichthöhe auf dem Trägerband (10) durch eine den Vorratsraum (32) in Transportrichtung des Trägerbandes (10) begrenzende Rakel (16) eingestellt wird, **dadurch gekennzeichnet, dass** die Beschichtungsmasse (22) über einen unterhalb des Füllniveaus in den Vorratsraum (32) mündenden Zuführkanal (18) nachgefüllt wird.

13. Verfahren nach Anspruch 12, **dadurch gekennzeichnet, dass** die Beschichtungsmasse (22) während des Beschichtungsvorganges vorzugsweise unter Konstanthaltung des Füllniveaus gesteuert in den Vorratsraum (32) eindosiert wird.

14. Verfahren nach Anspruch 12 oder 13, **dadurch gekennzeichnet, dass** die Beschichtungsmasse (22) mit einer allgemein nach oben gerichteten, gegebenenfalls schräg zur Ebene des Füllniveaus verlaufenden Aufwärtsströmung in den Vorratsraum (32) eingebracht wird.

15. Verfahren nach einem der Ansprüche 12 bis 14, **dadurch gekennzeichnet, dass** ein Überschuss an Beschichtungsmasse (22) über einen Überlauf (60) im Bereich des Füllniveaus abgeleitet wird.
